Europäisches Patentamt

European Patent Office

Office européen des brevets

(19)

(11) Publication number: **0 354 066**

**A2**

(12) **EUROPEAN PATENT APPLICATION**

(21) Application number: **89307997.0**

(22) Date of filing: **04.08.89**

(51) Int. Cl.⁵: **H 04 N 5/33**

(30) Priority: **04.08.88 US 228394   24.10.88 US 261913**

(43) Date of publication of application:
**07.02.90   Bulletin   90/06**

(84) Designated Contracting States: **BE DE FR GB NL**

(71) Applicant: **GEC AVIONICS, INC.
2975 Northwoods Parkway/Norcross P.O. Box 81999
Atlanta Georgia 30366 (US)**

(72) Inventor: **Givens, Gerald S.Jnr.
4941 Firth Lane
Atlanta Georgia 30360 (US)**

(74) Representative: **Tolfree, Roger Keith et al
The General Electric Co. p.l.c. Patent Department
GEC-Marconi Research Centre West Hanningfield Road
Great Baddow, Chelmsford Essex CM2 8HN (GB)**

(54) **Infrared spectral difference detector.**

(57) An infrared spectral difference detector capable of detecting an excess or deficit of infrared radiation having a preselected wavelength and for automatically analyzing the spectral content of infrared radiation. The detector processes at least two channels of infrared radiation information in order to display spectral distributions or to detect spectral distributions which differ either from normal blackbody radiation or from a reference signal. The detector may be implemented in a portable, hand-held unit for providing instantaneous detection capability for the field of view of the detector. Alternatively, the detector principles may be employed to modify a standard forward-looking infrared (FLIR) thermal imager to obtain pictorial representations of the spatial distribution of sources and absorbers of infrared radiation within a preselected narrow band of infrared wavelengths.

Figure 3

EP 0 354 066 A2

Description

## INFRARED SPECTRAL DIFFERENCE DETECTOR

**Technical Field**

The present invention relates generally to detectors for infrared radiation and relates particularly to a device which is capable of detecting sources and absorbers of infrared radiation of a particular preselected wavelength and which can detect changes in the target emission or absorption in the infrared region.

**Background of the Invention**

Infrared radiation is electromagnetic radiation in a band of wavelengths longer than visible red light. The wavelengths of visible light range from 0.3 microns (1 millionth of a meter, abbreviated "$\mu$") for blue light to 0.7 microns for red light. The infrared region generally denotes those wavelengths from 0.7 $\mu$ to approximately 20 $\mu$. Because all material objects radiate energy in the infrared region, detectors for infrared radiation are particularly useful for ascertaining the presence of objects where the level of visible light is low, i.e., at night or in a dark room. Infrared radiation is also commonly referred to as "thermal radiation".

The universal presence of thermal radiation has led to the development of thermal sensors and thermal imagers. Thermal sensors are devices which sense, usually electronically, the amount of thermal radiation present. Thermal imagers are devices which incorporate thermal sensors and scanning electronics to produce images representative of the field of view of the imager. The image depicts the spatial variation of the intensity of infrared radiation within the field of view and is typically a monochrome image of varying gray scale. The brightness and darkness of a monochrome image corresponds to the variation in intensity of infrared radiation in the field of view. Infrared imagers which provide pseudo-color (false color) pictures, in which the color of an area corresponds to the intensity of the infrared emission from that area, are also well known. Thermal imaging devices are valuable in military applications because of their ability to detect objects in a completely passive manner; that is, it is not necessary to illuminate the objects with radiation in order to detect the objects. Thermal imaging devices have been developed to the point where they can produce images comparable in quality to a monochrome television image.

The Stefan-Boltzmann radiation law states that the rate of total electromagnetic energy at all wavelengths emitted per unit area from any given surface is proportional to the product of the fourth power of the surface temperature times the emissivity of the surface, where the emissivity is a constant ranging from 0 to 1. The emissivity depends only on the nature of the emitting material and the characteristics of its surface. In mathematical form, the law is expressed by following formula for the intensity I per unit of surface area of radiation emitted by a material of surface emissivity e and absolute temperature T:

$$I = \sigma e T^4$$

where $\sigma$, the Stefan-Boltzmann constant, equals $0.567 \times 10^{-4}$ erg-cm$^{-2}$-deg$^{-4}$-sec$^{-1}$. It can be seen from this formula that objects which have the same emissivity and temperature have the same intensity of radiation. Objects with e = 1 are perfect radiators and perfect absorbers and are termed "black bodies".

Thermal sensors are sensitive fairly uniformly to infrared radiation over a range of wavelengths or bandwidth. Within this bandwidth, the typical prior art thermal imager provides no information regarding the spectral content (i.e., the relative intensity as a function of wavelength) of the infrared radiation detected. The typical prior art thermal imagers, incorporating prior art thermal sensors, are thus sensitive only to the intensity of infrared radiation and the direction of the radiation. Therefore, improvements in the quality of previous sensors and imagers have depended upon improvements in ability to distinguish between different total amounts of radiation received per unit of time (so-called thermal resolution) or upon improvements in ability to distinguish angular direction within the field of view (so-called spatial resolution).

Certain materials are known to be strong absorbers or radiators of infrared radiation at particular wavelengths. However, very few attempts have been made to allow imagers to analyze spectral content or to distinguish objects on the basis of the particular wavelength of infrared radiation emitted. The attempts which have been made have generally involved placing an infrared filter in the signal path of an imager and observing what, if any, differences were present in the filtered image as compared with the unfiltered image. This technique has many drawbacks, among them the necessity of changing filters, the lack of ability to detect two different wavelengths at a single instant of time, and the inconvenience and delay associated with producing and comparing two separate images.

**Summary of the Invention**

The present invention is an apparatus and method for detecting an excess or deficit of infrared radiation having a preselected wavelength and for automatically analyzing the spectral content of infrared radiation. It can be used alone or in conjunction with a standard thermal imager to provide a capability of distinguishing objects and changes in objects by wavelength-dependent characteristics.

The invention provides at least two infrared energy signal paths or channels which are processed and compared in order to detect distributions of infrared radiation which differ from the normal blackbody distribution or which differ from a reference signal. One or more energy channels can be filtered so as to define one or more energy channels of particular preselected wavelengths. If a particular wavelength is selected to be the emission or absorption frequency of a particular target of interest, the spectral difference detector acts as a detector for that target.

Thus, one of the objects of the present invention is to provide an apparatus and method for detecting an excess or deficit, relative to blackbody-predicted amounts, of infrared radiation having wavelengths within a narrow preselected band.

Another object of the present invention is to provide an apparatus and method for improving the signal-to-noise ratio in a detector for detecting an excess or deficit, relative to blackbody-predicted amounts, of infrared radiation having wavelengths within a narrow preselected band.

Another object of the present invention is to permit the passive detection of gases through the sensing of a deficit or surplus of energy in narrow spectral bands within the infrared spectrum, the bands being sensed corresponding to absorption or emission bands of the target gases.

Another object of the present invention is to provide an apparatus and method for allowing the same sensor to function as a reference signal source equivalent to that taken through a neutral density filter, as a primary signal source, or as both.

Another object of the present invention is to provide an apparatus and method for successively picking off and sensing the amounts of infrared energy within a succession of narrow bandwidth channels of differing wavelengths so that each of these amounts may be compared with each other.

Another object of the present invention is to provide an apparatus which can be added to an existing infrared thermal imager, thereby adding a spectral difference detection capability at moderate cost compared to the cost of the thermal imager.

These and other objects, features and advantages of the present invention will become apparent upon reading the following specification, including the appended claims, in conjunction with a review of the drawings.

## Brief Description of the Drawings

Figure 1 is a graph depicting the distribution of the intensity density of infrared radiation for a blackbody at various temperatures.

Figure 2 is a graph depicting the typical transmission of infrared radiation through the atmosphere.

Figure 3 is a block diagram of one embodiment of the present invention.

Figure 4 is a graph depicting the relative passband characteristics of an idealized two channel detector.

Figure 5 is a graph depicting the relative passband characteristics of a more realistic two channel infrared detector.

Figure 6 is a block diagram of another embodiment of the present invention, using a filter and beam splitter combined in a single element. The filter transmission characteristic is shown in Figure 6A and the filter reflection characteristic is shown in Figure 6B.

Figure 7 is a depiction of the passband characteristics of two narrow-band infrared filters.

Figure 8 depicts the arrangement of reflection filters and sensors for a six-channel infrared spectral analyzer, each filter (a through e) thereof having transmission characteristics given by Figure 8A. The reflection characteristics of filters a and b are given by Figures 8B and 8C, respectively, and the infrared energy at filter c, at sensor b and at sensor f are given by Figures 8D, 8E and 8F, respectively.

Figure 9A is a histogram display for an eight-channel infrared analyzer for the infrared energy having spectral content shown in Figure 9B.

Figure 10 is a block diagram of another embodiment of the present invention using a single collimator without a beam splitter.

Figure 11 is a side view of the spectral difference detector embodied in a hand-held unit.

Figure 12 is a block diagram of a standard forward-looking infrared ("FLIR") imager, modified to detect infrared spectral differences.

Figure 13 is a block diagram of a single-sensor infrared imager, modified to detect infrared spectral differences.

## Detailed Description of the Preferred Embodiments

The operation of the preferred embodiment will be better understood by reference to the following review of the theory of blackbody radiation. A blackbody, by definition, is an object that has the property of absorbing all of the radiation incident upon it. From thermodynamic considerations, a blackbody is also a perfect radiator, i. e., it has an emissivity equal to unity. A blackbody at absolute temperature T radiates electromagnetic energy of wavelength $\lambda$ according to the Planck distribution function $I_T(\lambda)\Delta\lambda$ given by the following formula:

$$I_T(\lambda)\Delta\lambda = \frac{2\pi hc^2}{\lambda^5} \frac{\Delta\lambda}{e^{hc/\lambda kT} - 1} \frac{erg}{sec\text{-}cm^2}$$

where
h = 6.63 x 10$^{-27}$ erg-sec (Planck's constant)
k = 1.38 x 10$^{-16}$ erg/deg (Boltzmann's constant)
c = 3 x 10$^{10}$ cm/sec (speed of light)
$\lambda$ = wavelength in cm
and $I_T(\lambda)\Delta\lambda$ is the power (i.e., energy per unit time) per unit area radiated by a body at absolute temperature T, for radiation having wavelengths in an interval $\Delta\lambda$ containing $\lambda$.

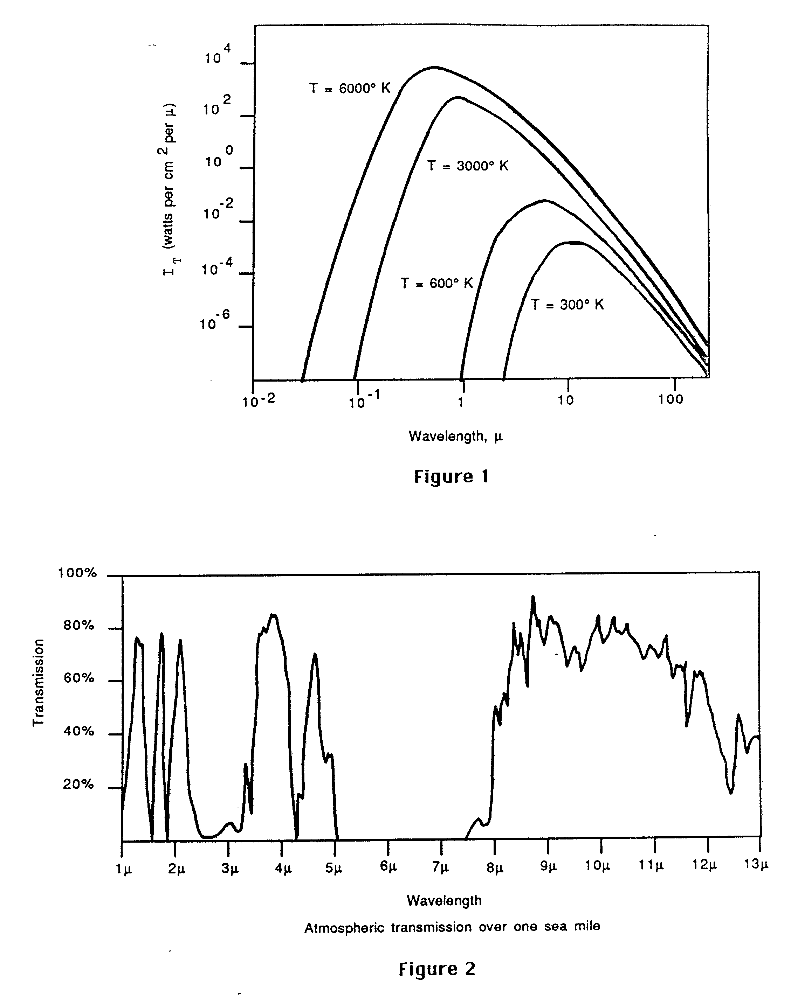

The shape of the distribution $I_T(\lambda)$ with respect to wavelength is given in Figure 1 for several temperatures.

From Figure 1, it can be seen that at ambient temperatures of approximately 0° to 30° C (273° - 303° absolute), $I_T(\lambda)$ has a broad peak in the band of wavelengths from 8 to 13 $\mu$. The broad, essentially flat characteristic of this peak indicates that there is normally a fairly uniform intensity of infrared radiation in the band of 8-13 $\mu$ for regions

containing objects at these ambient temperatures.

Figure 2 depicts the typical transmission of infrared radiation through the atmosphere. From Figure 2 it is seen that the atmosphere is fairly transparent to infrared radiation in the 8-13 μ band. This means that if an infrared detector is located several miles from objects having a temperature in the 0° to 30°C range, a useful portion of the emitted radiation in the 8-13 μ band will pass through the atmosphere and arrive at the detector. Similar remarks apply for a secondary band with infrared wavelengths from 3 to 5 μ.

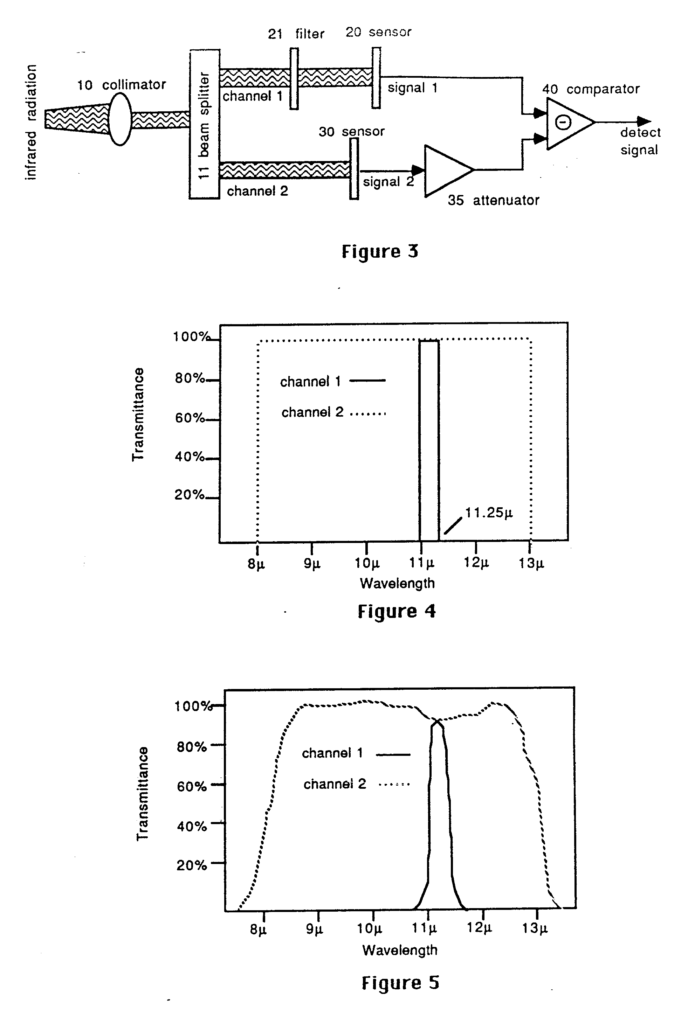

Referring now in more detail to the drawings depicting the invention, in which like numerals indicate like elements throughout the several views, Figure 3 depicts a block diagram of one embodiment of the infrared spectral difference detector. This embodiment is comprised of a collimator 10 which defines a field of view for the detector. Infrared radiation in the field of view is split by the beam splitter 11 into two channels. In channel one, filter 21 passes only radiation having wavelengths within a predetermined bandwidth. The channel-one sensor 20 provides an output signal which is proportional to the radiation intensity passing through the filter 21. In channel two, unfiltered radiation is passed directly to channel-two sensor 30 which produces a signal proportional to the intensity of the radiation in the second channel. The latter signal is normalized by a variable gain signal attenuator 35. The gain (or attenuation) of attenuator 35 is adjusted so that the inputs to the signal window comparator 40 are approximately equal when the distribution of infrared radiation in the field of view corresponds to the Planck formula for blackbody radiation. When the adjustment of the gain for attenuator 35 is properly accomplished, the window comparator 40 provides a null (zero) signal for blackbody radiation and a non-zero detect signal for deviations from the Planck formula. The size of the window desired for window comparator 40 depends upon the nature of the infrared signal source, the fluctuation characteristics of the transmission path (e.g., the atmosphere), the environmental noise levels, and the false alarm rate desired. Alternatively, the window comparator 40 can be a simple signal comparator which provides a detect signal when one input to the comparator is greater than the other and no detect signal otherwise.

The gain of signal amplifier 35 is adjusted according to the relative pass-band characteristics of the two infrared radiation channels. Figure 4 provides an idealized case for discussion purposes, where channel two is sensitive to all radiation within a five micron band from 8 μ to 13 μ, and filter 21 passes only radiation within a 0.25 micron band from 11.0 μ to 11.25 μ. Thus filter 21 passes 5% of the overall wavelength bandwidth of channel two. Filter 21 has, in addition, no degradation of intensity with its passband and a sharp cutoff on each side of its passband. With this configuration, the infrared radiation power in channel one after filtering will be 5% of the power in channel two. The gain of attenuator 35, therefore, should be set to 0.05. With this setting the window comparator 40 will, in a system operated in a linear region, provide the appropriate null and detect signals.

The foregoing normalization technique can be generalized for filters having non-ideal band pass shapes, such as those depicted, for example, in Figure 5. In each case, the measure of the area under the composite (collimator 10 plus filter 21) transmission curve for channel one is divided by the measure of the area under the transmission curve for channel two, and the quotient so derived is used for the fractional gain of signal attenuator 35. The zeroed or non-detect state is set by adjusting the gain for zero difference signal while pointing the detector at a surface which has emissivity near unity throughout the wavelength region of interest and which is controlled to be of the same general temperature as the expected targets.

It is noted that the normalization procedure is independent of the position of the channel-one transmission curve with respect to wavelength. Only the magnitude of the transmission area, not its position, is important for proper normalization of the amplifier 35. Although a source having a spectral intensity corresponding to that of blackbody radiation is preferably used for calibration, it will be appreciated that, depending upon the target characteristics, a non-blackbody source may be desired or required for calibration.

If the emission of the infrared source in the predetermined passband of filter 21 is low, or if the composite channel-one transmission curve is low, then the output of sensor 20 may be insufficient or undesirable for direct provision to window comparator 40. In this case it would be preferable to amplify the output of sensor 20 rather than attenuate the output of sensor 30. Therefore, a variable-gain signal amplifier would be placed in channel one rather than the attenuator in channel two. The normalization gain is then the reciprocal of the gains previously discussed, i.e., the proper gain is numerically equal to the quotient of the area under the channel-two transmission curve divided by the area under the composite channel-one transmission curve. It will also be appreciated that a combination of amplification of the output of sensor 20 (channel one) and attenuation of the output of sensor 30 (channel two) may be used to obtain signal levels most suitable for use with window comparator 40.

It will further be appreciated by those skilled in the art that a neutral density filter of appropriate strength could replace the signal attenuator 35. The neutral density filter would be placed between the beam splitter 11 and the channel-two sensor 30. The neutral density filter has the characteristic of passing all wavelengths equally within the range of interest, but at reduced intensity. The reduction in radiation intensity prior to sensing has the same effect as attenuating the signal after sensing.

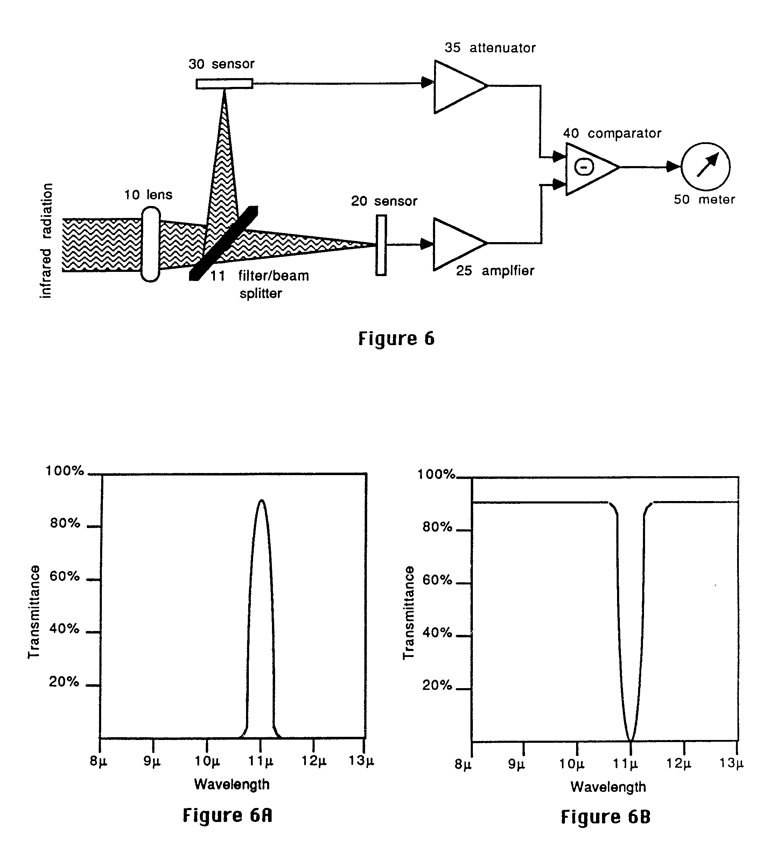

The present invention can also be implemented with reflection-type filters, rather than absorption filters. A particularly advantageous arrangement is to combine the functions of filtering and beam splitting, as depicted in Figure 6. Infrared energy impinges on a surface 11 which passes infrared energy in a narrow band as shown in Figure 6A. The filter of Figure 6A, having peak transmittance of about 90% at 11 $\mu$ and a bandwidth of about 0.5 $\mu$ at one-half peak transmittance, has been selected to detect a target emitting radiation at 11 $\mu$. In this filter, the remainder of the infrared energy incident on the filter reflects from the surface, as shown in Figure 6B. The sharp reflection cut-off points at 8 $\mu$ and 13 $\mu$ are arbitrary and shown for illustrative purposes only. The reflected energy is focused onto sensor 30. The transmitted energy is focused onto sensor 20. The two channels of information thus created are processed according to the discussion above by amplifying the signal from sensor 20 or attenuating the signal from sensor 30 and providing them to a signal comparator 40. The output from the comparator 40 is detected by a meter 50 or other indicating means. The filter/beam splitter 11 can be an Infraband® narrow band pass filter from Optical Coating Laboratory, Inc., Santa Rosa, California or a Laser Line Interference Filter from Oriel, Stratford, Connecticut.

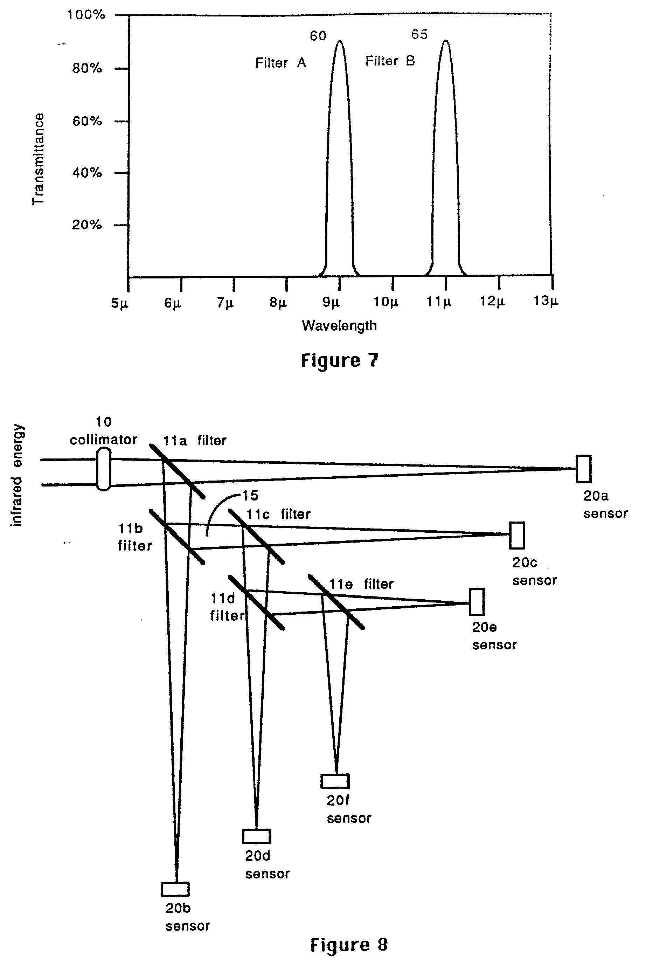

As yet another variation, filters with differing passband characteristics can be placed in both channels of the detector. With proper normalization, a subtraction of the signals from the sensors in the two channels will give a null output in the presence of blackbody radiation. Furthermore, the presence in the detector field of view of a source or absorber having a wavelength in either of the passbands of the two filters will provide a detect signal of either positive or negative polarity from the subtractor circuit. As a specific example, filter A has pass characteristics given by pass curve 60 in Figure 7, and filter B has pass characteristics given by the pass curve 65 in Figure 7. In this example, the area under the pass curve 60 is equal to the area under curve 65. Under this condition, no adjustment of the output signals is necessary; the signals from infrared sensors will be equal since at ambient temperature (i.e., approximately 0° to 30°C), the intensity of infrared radiation at 9 $\mu$ is approximately equal to that at 11 $\mu$. This variation can be implemented according to the diagram in Figure 3 if filter 21 is made to correspond to filter A, filter B is placed in the signal path between the beam splitter 11 and the channel-two sensor 30, and the gain of the signal attenuator 35 is set to 1.0 (corresponding to no adjustment of the signal).

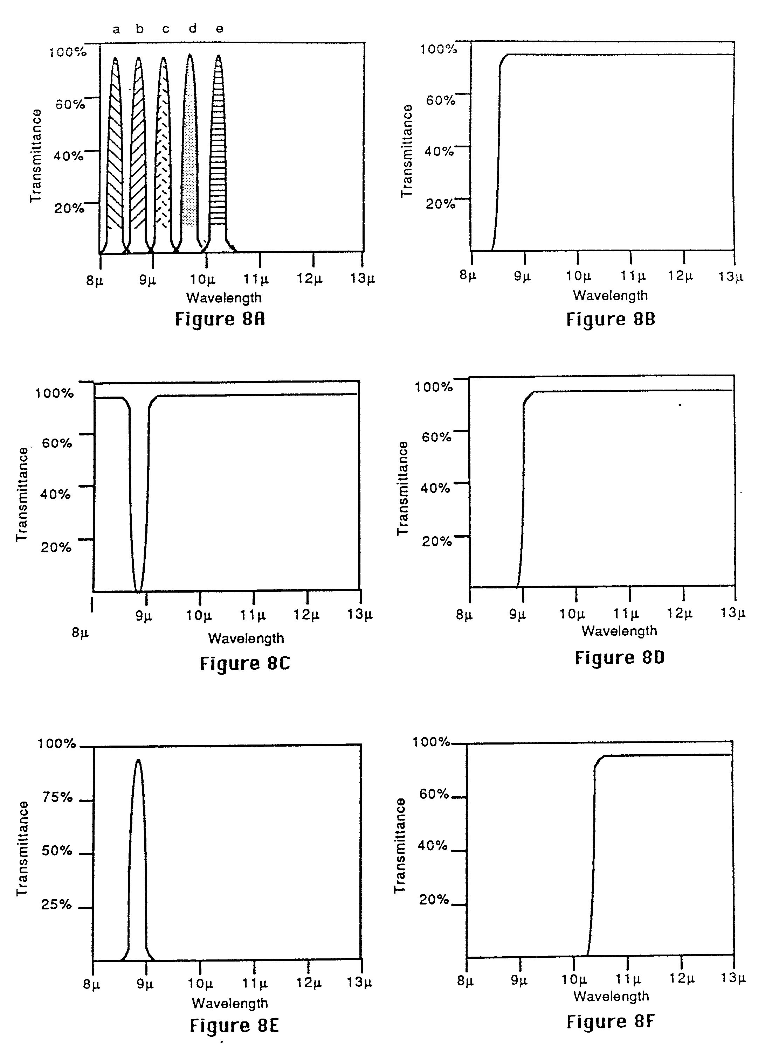

Generalizing the above variations can produce a multichannel spectrum analyzer of great flexibility. As a specific example, Figure 8 depicts a six-channel analyzer with five filtered channels and a sixth channel which receives the remaining unfiltered energy incident within the field of view. The field of view is defined by a collimator 10 through which infrared radiation passes to impinge on filter/beam splitter 11a. Only energy within the 8.0 $\mu$ to 8.5 $\mu$ range is transmitted by filter/beam splitter 11a, as is shown in Figure 8A, curve a, after which it is detected by sensor 20a. The remaining energy is reflected, as is shown in Figure 8B. The reflected energy next encounters filter/beam splitter 11b which transmits energy within the 8.5 $\mu$ to 9.0 $\mu$ range, as shown in Figure 8A, curve b. The transmitted energy depicted in Figure 8E, is detected by sensor 20b, while the remaining energy is reflected according to the reflection characteristic shown in Figure 8C. After reflection from filters 11a and 11b, the infrared energy at point 15 has all of the energy with wavelengths above 9.0 $\mu$, as shown in Figure 8D. The reflection/transmission process is repeated three more times, by filters 11c, 11d and 11e having transmission characteristics shown in Figure 8A, curves c, d and e. This process provides five separate narrow-band signals at different wavelengths, followed by a "residue" signal provided by the last sensor 20f. The signal from this sensor is representative of the remaining energy shown in Figure 8F.

The number of channels in the multichannel spectrum analyzer is limited only by the width of each filter transmission band as compared to the total bandwidth of the infrared frequencies of interest. In the above example, filter bandwidths of 0.5 $\mu$ would permit a multichannel analyzer of eight channels over the wavelength range 8.0 $\mu$ to 12.0 $\mu$. Narrower band pass filters would allow for correspondingly more channels.

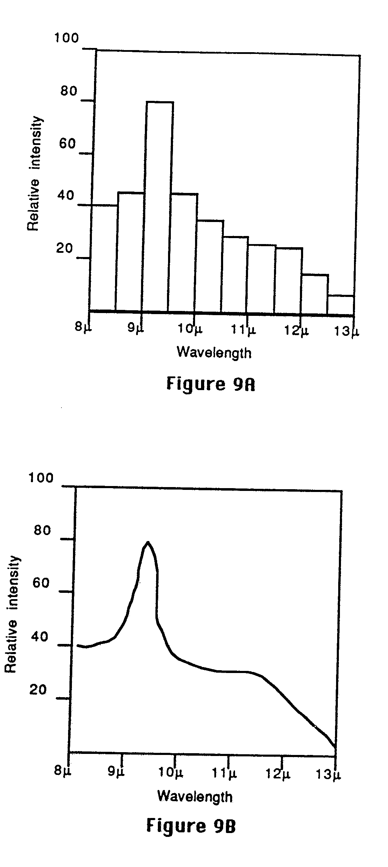

The multichannel spectrum analyzer provides a number of signals, corresponding to the number of channels, each representative of the intensity of infrared radiation having wavelengths within the passband of the associated filter. These signals may be adjusted, combined or compared algebraically in any manner and sequence which would produce meaningful results for targets of interest. Alternatively, the outputs from all of the sensors may be quantified and displayed in histogram fashion to show spectral intensity density as a function of wavelength. In this manner, the multichannel spectral difference detector would present a direct representation of the variation of infrared radiation as a function of wavelength for the instantaneous field of view of the detector. As an example of the display produced by the alternative treatment of the sensor outputs, Figure 9A depicts the histogram produced by an eight-channel multichannel analyzer when its field of view contains radiation having the spectral distribution shown in Figure 9B.

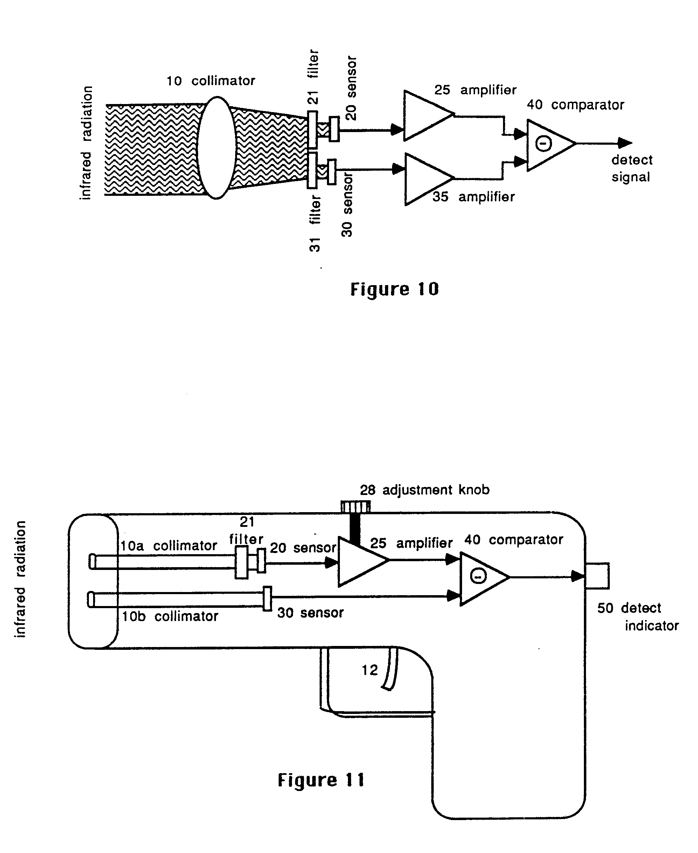

Recognizing that state-of-the-art infrared sensors can be made quite small (on the order of 70 $\mu$ in diameter), it is possible to place the detectors close together in the image plane of the detector optics and dispense with the beam splitter. Referring to Figure 10, which depicts this embodiment, a focused or slightly defocused beam of infrared energy illuminates two small infrared sensors simultaneously. The sensors are sufficiently small and closely spaced enough that they gather energy emitted by the same object. They thus have essentially the same instantaneous field of view relative to the subtense of the target object. A transmission filter 21 is mounted directly over the sensor 20. Another transmission filter 31 is optionally mounted directly over sensor 30. The channel-one signal from sensor 20 is processed through a variable amplifier/attenuator 25 and passed to the comparator 40, where it is compared with the channel-two signal provided from sensor 30 through variable amplifier/attenuator 35. With the proper setting of the amplifier/attenuator gains, as discussed above, the comparator will provide a detect signal when abnormal amounts of infrared energy pass through filter 21 (or, if present, filter 31).

Regardless of the many variations, the present invention can be simply and inexpensively housed in a "gun" or other aiming device to provide a hand-held unit. The hand-held unit can employ a single collimator and a beam splitter or dual collimators defining substantially identical fields of view as depicted in Figure 11. Filter 21 is mounted between collimator 10a and the channel-one sensor 20. Provision can be made for interchangeable filters. Sensor 30 senses infrared radiation passing through collimator 10b. The adjustable gain amplifier 25 is used to normalize the channel-one signal, as discussed above. The signals in the two channels are compared by comparator 40 and a detect signal is passed to the detect indicator 50.

In operation, an on/off switch 12 operatively associated with the gun trigger is switched on. Power may be supplied by batteries mounted in the gun handle. The amplifier gain is adjusted by an adjustment control 28 operatively connected to the amplifier 25. The gun may then be pointed in the desired direction and the detect indicator 50, mounted at the rear of the gun as shown in Figure 11, is checked for a detect indication.

In an alternative implementation, a subtractor replaces the comparator 40 and the detect indicator 50 is a numeric readout. The numeric readout quantifies the magnitude of the difference signal produced by the subtractor, providing an indication of the relative strength of the infrared signal source or absorber as compared to the blackbody reference signal.

The collimators should preferably provide a fairly narrow field of view so as to give a fairly precise indication of the direction of the infrared source of interest. In the hand-held implementation, the operator may easily hold and wave the device of Figure 11 around in the general direction of the sources to be investigated for spectral differences. The operator receives an immediate and continuous update on the strength of the target spectral differences detected within the narrow field of view. By continuing to point the device in differing directions, he can build a mental picture of the size, shape and location of the target object. Alternatively, if the device is carried within a platform or turret which allows the device to be pointed throughout the area of interest, and signals representing the pointing angles and the device detection level are fed into a computer, an electronic picture of the objects of interest can be built up. The pictorial information may be displayed locally, or communicated to a distant central control station for display.

The detect indicator 50 may also communicate by audible tones of varying intensity, frequency or pulse rate or by other visual means, such as a meter or lights of varying intensity, color or number. The device of Figure 11 may also, of course, be implemented, calibrated, and used with a single collimator and a beam splitter as shown in Figure 3 and Figure 6. The use of a single collimator and a conventional beam splitter automatically assures that both detectors are looking at the same target but, because the radiation is split between the two detectors, the radiation intensity provided to each detector is reduced. The use of dual collimator provides a higher radiation intensity to each detector but requires that the two collimators be boresighted so that both detectors view essentially the same target area.

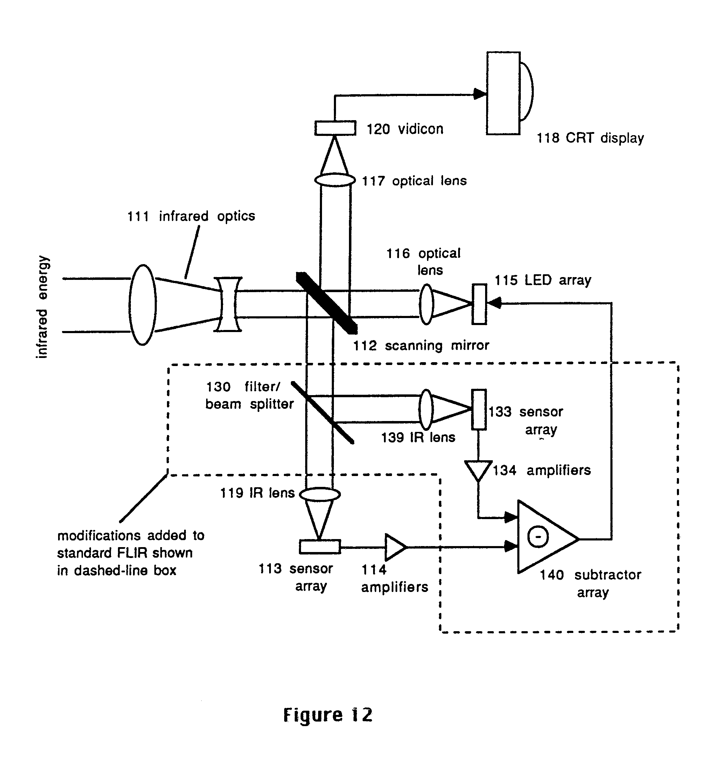

The present invention may also be used in conjunction with a so-called Forward-Looking InfraRed ("FLIR") imager, such as described in U.S. Patent No. 4,328,516, by modifications to the imager, such as those shown in Figure 12. A filter/beam splitter 130 is placed in the infrared radiation path between the scanning mirror 112 and the infrared lens 119 (if present) preceding the infrared sensor array 113. An infrared lens 139 and array of infrared sensors 133 identical to the array 113 is added and positioned to receive the reflected infrared energy. The filter/beam splitter 130 passes only a narrow preselected band of wavelengths, depending upon the choice of the filter/beam splitter 130. The passed radiation and the reflected radiation are scanned across the sensor arrays 113 and 133, respectively, by the action of the scanning mirror 112. The two arrays of sensors thus produce two multi-signal channels of information. The outputs from the existing and added arrays of sensors are amplified by the existing set of amplifiers 114 and a new set of amplifiers 134, respectively, and passed to an added array of signal subtractors 140. For proper temporal registration at the signal subtractors, time delay of the sensor signals in one or the other of the two channels may be necessary, as those skilled in the art will appreciate. The outputs from the signal subtractors 140 may then be passed to the LED array 115 where subsequent processing proceeds by means of standard FLIR techniques.

The modification just described will enable the modified imager to produce images on the CRT display 118 which are medium grey for blackbody radiation, with bright areas indicating sources of infrared radiation of the preselected band of wavelengths and dark areas indicating absorbers of infrared radiation within the preselected wavelength band. Alternatively, the outputs from the subtractor array 140 may be used to generate false color images of the kind well-known to those skilled in the art.

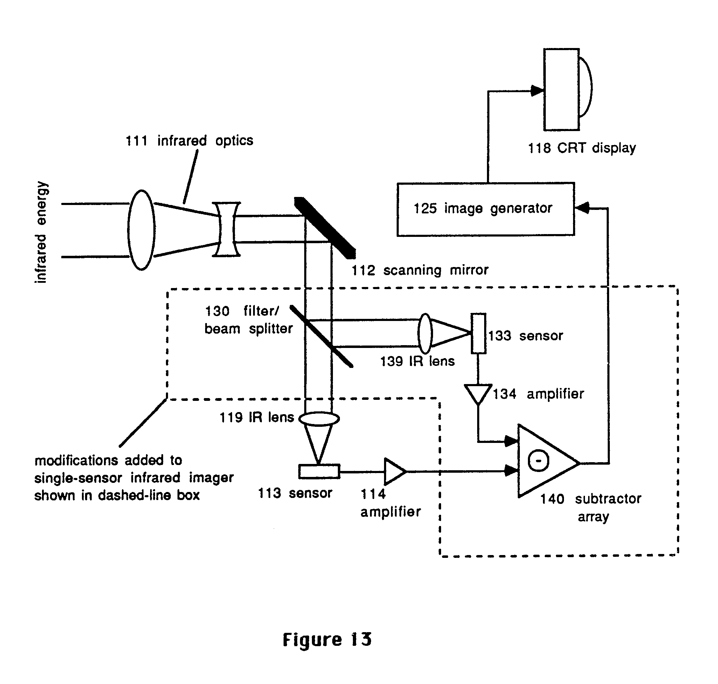

The above-described modifications can also be employed in any infrared imager, such as unscanned, or staring, arrays of infrared sensors and scanned systems having only a single infrared sensor, such as shown in Figure 13. The imager may provide a real time, volatile display or may employ frame-store devices, as those skilled in the art will appreciate.

Finally, it will be understood that the preferred embodiment of the present invention has been disclosed by way of example, and that other modifications may occur to those skilled in the art without departing from the scope and spirit of the appended claims.

## Claims

1. A detector for detecting sources and absorbers of infrared radiation within a first predetermined range of wavelengths, comprising:

a first sensor means for sensing infrared radiation within a first field of view and for providing a first output signal in response thereto, said first sensor means being responsive only to infrared radiation within said first predetermined range of wavelengths;

a second sensor means for sensing infrared radiation within a second field of view substantially the same as said first field of view and for providing a second output signal in response thereto, said second sensor means being responsive only to infrared radiation within a second predetermined range of wavelengths;

means for adjusting at least one of said first output signal and said second output signal such that said first output signal is approximately equal to said second output signal when said infrared radiation has a predetermined spectral intensity distribution; and

output means for providing a detector output signal in response to a predetermined relationship between said first output signal and said second output signal.

2. The detector of Claim 1 wherein said means for adjusting comprises a neutral density filter.

3. The detector of Claim 1 wherein said means for adjusting comprises a variable gain signal attenuator.

4. The detector of Claim 1 wherein said means for adjusting comprises a variable gain signal amplifier.

5. The detector of Claim 1 wherein said output means comprises a signal comparator.

6. The detector of Claim 1 wherein said output means comprises a signal window comparator.

7. The detector of Claim 1 wherein said output means comprises a signal subtractor.

8. The detector of Claim 1 wherein said first sensor means comprises an infrared radiation sensor and a filter.

9. The detector of Claim 1 wherein said second predetermined range of wavelengths is greater than and includes said first predetermined range of wavelengths.

10. The detector of Claim 1 wherein said predetermined spectral intensity distribution corresponds to the distribution for blackbody radiation.

11. The detector of Claim 1 wherein said first field of view is differentiated from said second field of view by a beam splitter.

12. The detector of Claim 11 wherein said beam splitter functions additionally as a transmission filter to define said first predetermined range of wavelengths.

13. The detector of Claim 12 wherein said beam splitter functions additionally as a reflector to define said second predetermined range of wavelengths.

14. The detector of Claim 1 wherein said predetermined relationship between said first output signal and said second output signal corresponds to the algebraic difference between the signals.

15. A method for detecting sources and absorbers of infrared radiation within a first predetermined range of wavelengths, comprising:

sensing infrared radiation within a first field of view and providing a first output signal in response thereto whenever any of said infrared radiation is within said first predetermined range of wavelengths;

sensing infrared radiation within a second field of view substantially the same as said first field of view and providing a second output signal in response thereto whenever any of said infrared radiation is within a second predetermined range of wavelengths;

adjusting at least one of said first output signal and said second output signal such that said first output signal is approximately equal to said second output signal when said infrared radiation has a predetermined spectral intensity distribution; and

providing a detector output signal in response to a predetermined relationship between said first output signal and said second output signal.

16. A multichannel spectrum analyzer for detecting the amounts of infrared radiation within a plurality of narrow wavelength bands, comprising:

a means for defining a field of view;

a first reflection filter for receiving the radiation within the field of view, for passing the infrared radiation within a first narrow wavelength band, and for reflecting the remainder of the incident infrared radiation;

a first detector means for detecting the amount of infrared radiation passed by the first reflection filter;

a second reflection filter for receiving the radiation reflected by the first reflection filter, for passing the infrared radiation with a second narrow wavelength band, and for reflecting the remainder of the incident infrared radiation; and

a second detector means for detecting the amount of infrared radiation passed by the second reflection filter.

17. A method of detecting the amounts of infrared radiation within a plurality of narrow wavelength bands in a field of view, comprising the steps of:

placing a first reflection filter within the field of view to pass the infrared radiation with a first narrow wavelength band and to reflect the remainder of the incident radiation;

detecting the amount of infrared radiation passed by the first reflection filter;

placing a second reflection filter to receive the radiation reflected by the first reflection filter, to pass the infrared radiation within a second narrow wavelength band, and to reflect the remainder of the incident infrared radiation; and detecting the amount of infrared radiation passed by the second reflection filter.

18. In an infrared imager having infrared optics defining a field of view, a first array of infrared sensors and a means for generating an image of the field of view from the outputs of the infrared sensors, the improvement comprising:
a means for dividing the infrared energy into two channels so that only one of the two channels is received by said first array of infrared sensors;
a filter means for restricting one of said channels of infrared energy to a narrow band of wavelengths containing a preselected wavelength;
a second array of infrared sensors for receiving the channel of infrared energy not received by said first array of infrared sensors;
a means for adjusting the signal outputs of at least one of said first and second arrays of infrared sensors;
an array of signal comparators for comparing and combining each output from said first array of infrared sensors with the corresponding output from said second array of infrared sensors and for providing an output signal to said image generating means;
so that the infrared imager generates an image corresponding to the infrared spectral differences present in the field of view of the imager.

19. In an infrared imager having infrared optics defining a field of view, a first infrared sensor, and a means for generating an image of the field of view from the output of the infrared sensor, the improvement comprising:
a means for dividing the infrared energy into two channels so that only one of the two channels is received by said first infrared sensor;
a filter means for restricting one of said channels of infrared energy to a narrow band of wavelengths containing a preselected wavelength;
a second infrared sensor for receiving the channel of infrared energy not received by said first infrared sensor;
a means for adjusting the signal output of at least one of said first and second infrared sensors;
a comparator for comparing and combining the output from said first infrared sensor with the output from said second infrared sensor and for providing an output signal to said image generating means;
so that the infrared imager generates an image corresponding to the infrared spectral differences present in the field of view of the imager.

20. Apparatus for producing an electrical or visual representation of a field of view characterised by means for detecting relative intensities of different spectral components of radiation received, and using the results of such detection to generate the said representation.

$I_T$ (watts per cm$^2$ per μ)

T = 6000° K

T = 3000° K

T = 600° K

T = 300° K

Wavelength, μ

**Figure 1**

Transmission

Wavelength

Atmospheric transmission over one sea mile

**Figure 2**

Figure 3

Figure 4

Figure 5

Figure 6

Figure 6A

Figure 6B

Figure 7

Figure 8

Figure 8A

Figure 8B

Figure 8C

Figure 8D

Figure 8E

Figure 8F

EP 0 354 066 A2

Figure 9A

Figure 9B

EP 0 354 066 A2

**Figure 10**

**Figure 11**

111 infrared optics

infrared energy

120 vidicon

118 CRT display

117 optical lens

116 optical lens

115 LED array

112 scanning mirror

130 filter/ beam splitter

133 sensor array

139 IR lens

134 amplifiers

modifications added to standard FLIR shown in dashed-line box

119 IR lens

113 sensor array

114 amplifiers

140 subtractor array

Figure 12

111 infrared optics

infrared energy

118 CRT display

125 image generator

112 scanning mirror

130 filter/
beam splitter

133 sensor

139 IR lens

134 amplifier

119 IR lens

modifications added to
single-sensor infrared imager
shown in dashed-line box

113 sensor

114
amplifier

140 subtractor
array

**Figure 13**